# EUROPÄISCHE PATENTSCHRIFT

(11) **EP 1 454 887 B1**
(45) Veröffentlichungstag und Bekanntmachung des Hinweises auf die Patenterteilung: **17.03.2010**
(21) Anmeldenummer: 04002746.8
(22) Anmeldetag: 07.02.2004
(51) Int. Cl.: C03B 7/16

(54) **Tropfenverteiler für eine Glasformmaschine**
Gobfeeder for a glass forming machine
Méchanisme de transfer de paraison dans une machine à façonner le verre

(30) Priorität: 04.03.2003 DE 20303444 U
(43) Veröffentlichungstag der Anmeldung: 08.09.2004
(73) Patentinhaber: Heye International GmbH, 31683 Obernkirchen (DE)
(72) Erfinder: Hermening, Heinz, 32457 Porta Westfalica (DE); Bögert, Hermann, 31749 Auetal (DE)
(74) Vertreter: Sobisch, Peter

(56) Entgegenhaltungen:
- EP-A- 0 273 559
- EP-A- 0 779 248
- US-A- 3 597 187
- PATENT ABSTRACTS OF JAPAN Bd. 017, Nr. 190 (C-1048), 14. April 1993 (1993-04-14) -& JP 04 342426 A (TOUYOU GARASU KIKAI KK), 27. November 1992 (1992-11-27)
- PATENT ABSTRACTS OF JAPAN Bd. 007, Nr. 100 (C-164), 28. April 1983 (1983-04-28) -& JP 58 026037 A (FUSOU SEIKOU KK), 16. Februar 1983 (1983-02-16)

## Beschreibung

Die Erfindung betrifft einen Tropfenverteiler gemäß dem Oberbegriff des Anspruchs 1.

Bei einem bekannten Tropfenverteiler dieser Art (EP 0 202 116 A1, Fig. 10, 11a und 11b) treibt der Elektroservomotor mit waagerechter Längsachse über eine Kupplung eine koaxiale Kugelumlaufspindel drehend an. Mit der Kugelumlaufspindel steht eine Kugelumlaufmutter einer gegen Drehung gesicherten, längsverschiebbaren Gleiteinheit im Eingriff. An der Gleiteinheit ist eine Lasche und an der Lasche eine Zahnstange angelenkt. Mit der Zahnstange kämmen alle Ringritzel der Scooprinnen. Nachteilig sind hierbei der hohe bauliche Aufwand, der große Raumbedarf und die durch die großen zu beschleunigenden Massen bedingte hohe erforderliche Leistung des Elektroservomotors.

Bei einem an sich bekannten Tropfenverteiler (US 4 529 431 A) für Doppeltropfenbetrieb weist das Getriebe (Fig. 5 und 6) auf: Ein durch den Elektroservomotor alternierend antreibbares Winkelgetriebe, eine senkrechte Abtriebswelle des Winkelgetriebes, einen an der Abtriebswelle befestigten radialen Arm, an dem Arm zwei außenverzahnte, axial miteinander fluchtende Zahnsektoren und ein mit jedem Zahnsektor kämmendes Ritzel, wobei jedes der beiden Ritzel auf einer senkrechten, in seitlichem Abstand voneinander angeordneten, eine Scooprinne tragenden Welle befestigt ist. Zwischen einer dieser Wellen und der zugehörigen Scooprinne ist ein offener Rahmen angeordnet, durch den hindurch sich die andere Scooprinne erstreckt. Hier bestehen ebenfalls die vorerwähnten Nachteile.

Aus der US 3 597 187 A ist es an sich bekannt, durch einen Motor (Fig. 1) eine Schnecke (Fig. 2) in konstanter Drehrichtung anzutreiben. Die Schnecke dreht ein Schneckenrad und dieses über eine waagerechte Welle eine Tragscheibe mit einem sich radial nach außen über den gesamten Umfang erstreckenden Nockenring. An jeder axialen Fläche des Nockenrings liegt eine Nockenrolle an. Beide Nockenrollen sind an einem Zahnsektor gelagert, der an einer senkrechten Welle befestigt ist. Der Zahnsektor treibt in der gleichen Weise wie bei der US 4 529 431 A zwei in seitlichem Abstand voneinander und in unterschiedlichen Höhenebenen angeordnete Ritzel und die damit verbundenen Scooprinnen alternierend an. Auch hier bestehen die vorerwähnten Nachteile.

Aus der US 4 793 847 A ist es an sich bekannt, durch einen Elektroservomotor mit waagerechter Längsachse eine koaxiale Nockenwelle drehend anzutreiben. Auf der Nockenwelle ist für jede Scooprinne ein zylindrischer Nocken mit einem schraubenförmigen Kurvengang befestigt. Diesen Kurvengang übergreifen jeweils zwei Kurvenrollen, die sich im Abstand voneinander radial nach außen von einem senkrechten Hülsenabschnitt am oberen Ende der Scooprinne erstrecken. Der Hülsenabschnitt ist drehbar in einem Gehäuse des Tropfenverteilers gelagert. Diese Bauweise ist kompliziert und im Bereich des Kurvengetriebes verschleißanfällig.

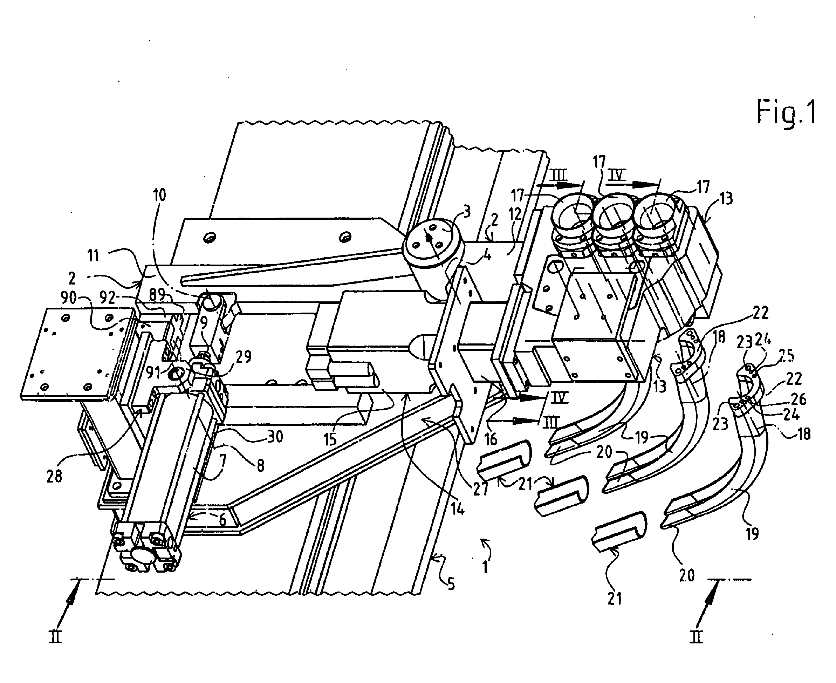

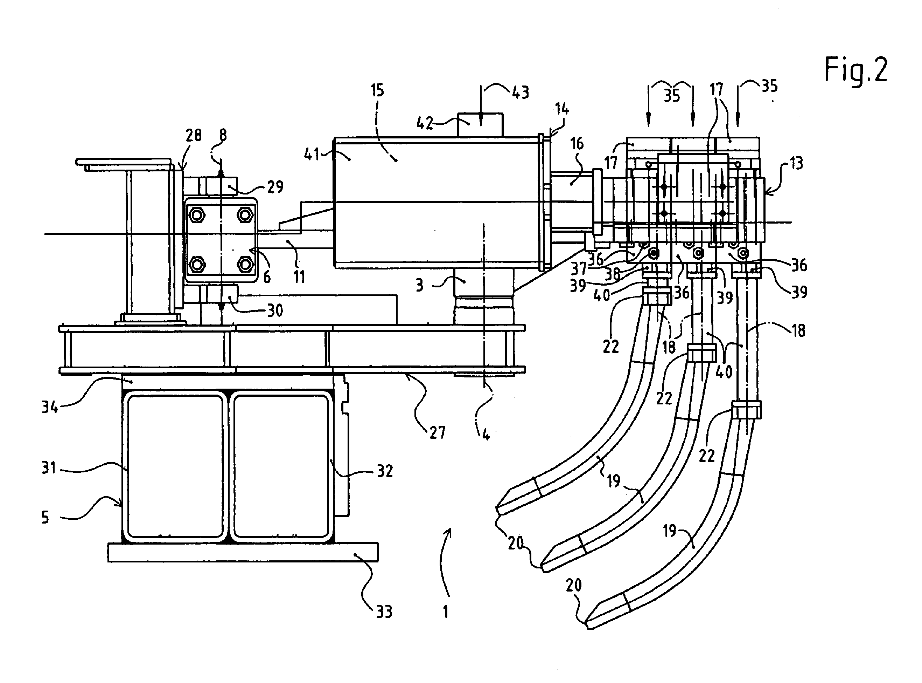

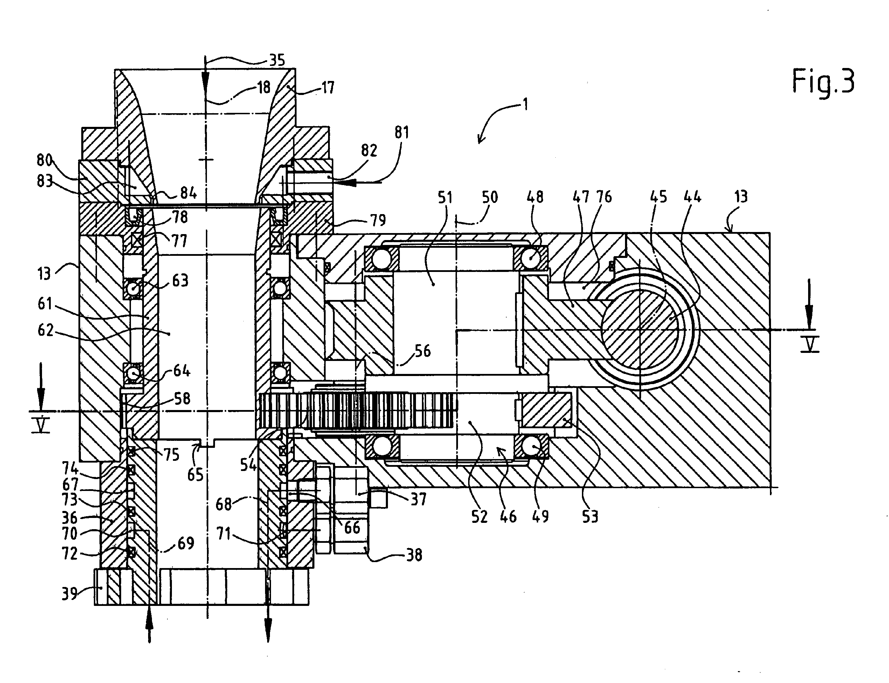

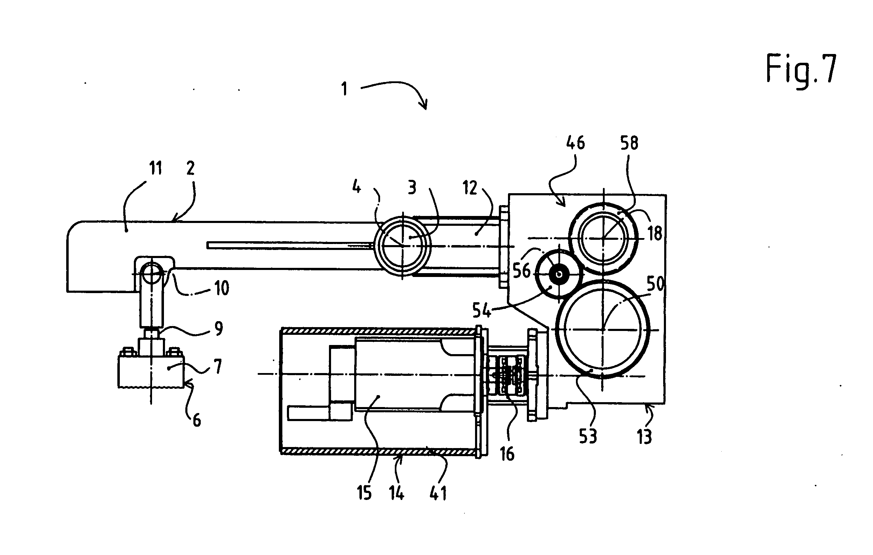

Aus der EP 0 133 775 A2 ist es an sich bekannt, durch einen Elektroservomotor mit waagerechter Längsachse über eine Kupplung, eine Welle und ein Winkelgetriebe ein Ritzel drehend anzutreiben. Das Ritzel kämmt mit einer Innenverzahnung eines Zahnkranzes, der drehbar in einem Gehäuse des Tropfenverteilers gelagert ist. Ringritzel der Scooprinnen werden entweder direkt (Fig. 1 und 3) oder über ein Antriebs- und ein Zwischenzahnrad (Fig. 7) durch den Zahnkranz drehend angetrieben. Jedes Ringritzel ist gemäß Fig. 2 außen an einem drehbaren senkrechten Hülsenabschnitt befestigt. Mit dem Hülsenabschnitt ist unten das obere Ende der zugehörigen Scooprinne verbunden. Der gesamte Tropfenverteiler ist auf zwei zueinander parallelen Führungsstangen (Fig. 1) durch eine integrierte Kolben-Zylinder-Einheit waagerecht verschiebbar, so dass die Tropfen im Notbetrieb nicht mehr in die Scooprinnen fallen, sondern in den Scherbenbehälter abgeleitet werden. Auch diese Bauart ist träge, aufwändig und beansprucht viel Raum.

Tropfenverteiler sind auch aus JP 04 342 426 und JP 58 026 037 bekannt.

Der Erfindung liegt die Aufgabe zugrunde, den Tropfenverteiler einfacher, leichter und betriebssicherer zu gestalten.

Diese Aufgabe ist durch die Merkmale des Anspruchs 1 gelöst. Der Tropfenverteiler eignet sich insbesondere zum Einsatz in an sich bekannten I.S. (Individual Section)-Glasformmaschinen. Das neue Getriebe ist kompakt, sehr präzise und leicht und schnell zugänglich. Die Ringritzel können sich z.B. um ± 70 ° von einer Mittelstellung aus hin und her drehen.

Gemäß Anspruch 2 ist der Fall gelöst, dass nur eine Scooprinne vorhanden ist. Mit einer solchen Maschine werden üblicherweise verhältnismäßig große und schwere Hohlglasgegenstände hergestellt. Alternativ kann, wenn die geometrischen Gegebenheiten dies zulassen, auch das Zwischenzahnrad entfallen, so dass das Zahnrad dann direkt im Eingriff mit dem Ringritzel steht.

Die Merkmale des Anspruchs 3 regeln diejenigen Fälle, in denen mehr als eine Scooprinne vorhanden sind. Vorzugsweise ist der Antrieb dann allen Scooprinnen gemeinsam.

Gemäß den Ansprüchen 4 bis 6 ist die Getriebekonfiguration an die jeweilige Anzahl der Scooprinnen angepasst.

Gemäß Anspruch 7 ergibt sich eine kompakte, sehr betriebssichere Konstruktion. Der Zahnring ist vorzugsweise einstückig mit der Hülse ausgebildet.

Durch die Merkmale des Anspruchs 8 kann auf einfache und betriebssichere Weise die Kühlung der Scooprinnen erfolgen. Zwischen die Verbindungshülse und das obere Ende der zugehörigen Scooprinne kann bei Bedarf noch ein Zwischenstück montiert werden. Als Kühlmedium kommt Kühlwasser oder ein Kühlgas in Betracht.

Gemäß Anspruch 9 kann gebaut werden, wenn ein Kühlgas Verwendung findet.

Mit den Merkmalen jedes der Ansprüche 10 bis 12 lässt sich das Spiel in den Verzahnungen des Getriebes auf einfache Weise minimieren. Der Exzenterbolzen kann z.B. über einen Vierkant mit einem Steckschlüssel drehbar sein. Die jeweils gefundene Relativeinstellung der beiden Teilzahnräder kann beispielsweise dadurch fixiert werden, dass die Teilzahnräder durch axiale Schrauben gegeneinander gespannt werden.

Gemäß Anspruch 13 kann als Kupplung z.B. eine spielfreie oder spielarme Wellenkupplung eingesetzt werden, die als Maschinenelement handelsüblich ist.

Durch die Merkmale des Anspruchs 14 ist es auf einfache und sehr betriebssichere Weise möglich, im Notbetrieb die Tropfen an dem Tropfenverteiler vorbei fallen zu lassen und in den Scherbenbunker zu befördern.

Durch die Merkmale des Anspruchs 15 ist eine schnell reagierende Schwenkung des Tropfenverteilers gewährleistet. Vorzugsweise wird hier eine pneumatische Kolben-Zylinder-Einheit eingesetzt.

Gemäß Anspruch 16 lässt sich die Normalstellung des Tropfenverteilers schnell und sicher finden.

Diese und weitere Merkmale und Vorteile der Erfindung werden nachfolgend anhand der in den Zeichnungen dargestellten Ausführungsbeispiele näher erläutert. Es zeigt
Fig. 1 eine perspektivische Ansicht eines für Dreifachtropfenbetrieb ausgelegten Tropfenverteilers,
Fig. 2 die Seitenansicht gemäß Linie II-II in Fig. 1,
Fig. 3 die Schnittansicht nach Linie III-III in Fig. 1 in vergrößerter Darstellung,
Fig. 4 die Schnittansicht nach Linie IV-IV in Fig. 1 in vergrößerter Darstellung,
Fig. 5 die Schnittansicht nach Linie V-V in Fig. 3,
Fig. 6 die Draufsicht auf eine andere Ausführungsform des Tropfenverteilers mit nur zwei Scooprinnen in geschwenkter Notbetriebsstellung,
Fig. 7 die Draufsicht auf einen wiederum anderen Tropfenverteiler mit nur einer Scooprinne,
Fig. 8 eine den Fig. 3 und 4 entsprechende Schnittansicht durch eine andere Ausführungsform des Tropfenverteilers mit einem zwei Teilzahnräder aufweisenden Zwischenzahnrad, prinzipiell gemäß Linie VIII-VIII in Fig. 5,
Fig. 9 die Draufsicht auf das obere Teilzahnrad gemäß Fig. 8 in vergrößerter Darstellung,
Fig. 10 die Draufsicht auf das untere Teilzahnrad gemäß Fig. 8 in vergrößerter Darstellung,
Fig. 11 eine vergrößerte Seitenansicht des Exzenterbolzens gemäß Fig. 8,
Fig. 12 die Ansicht gemäß Linie XII-XII in Fig. 11 und
Fig. 13 die Ansicht gemäß Linie XIII-XIII in Fig. 12.

Fig. 1 zeigt einen Tropfenverteiler 1 für eine nicht weiter dargestellte Glasformmaschine. Dem Tropfenverteiler 1 werden in an sich bekannter Weise periodisch Tropfen schmelzflüssigen Glases, meist im freien Fall, zugeführt. Diese Tropfen werden durch eine Schere von einem Glasstrang abgetrennt, der aus einer Auslassöffnung einer Speiserschüssel austritt. Die Herstellung solcher Tropfen ist an sich bekannt und braucht hier nicht im einzelnen dargestellt und beschrieben zu werden.

Der Tropenverteiler 1 weist einen Rahmen 2 auf, der um eine senkrechte Achse 3 mit einer Längsachse 4 hin und her schwenkbar an einer Grundplatte 27 des Tropfenverteilers 1 gelagert ist. Die Schwenkung erfolgt durch eine Kolben-Zylinder-Einheit 6, deren Zylinder 7 um eine senkrechte Achse 8 schwenkbar an der Grundplatte 27 gelagert und deren Kolbenstange 9 längs einer senkrechten Achse 10 an einem Hebel 11 des Rahmens 2 angelenkt sind. An dem in Fig. 1 linken Ende des Hebels 11 ist ein gehärteter Positionierkörper 89 von kreuzförmiger Querschnittsfläche befestigt. In der in Fig. 1 gezeigten nicht ausgeschwenkten Normalstellung des Tropfenverteilers 1 wirkt der Positionierkörper 89 derart mit einem ebenfalls gehärteten maschinenfesten Positionieranschlag 90 von U-förmiger Querschnittsfläche zusammen, dass der Tropfenverteiler 1 sowohl in waagerechter als auch in senkrechter Richtung in seiner Normalstellung sicher positioniert ist. Dabei greift ein waagerechter Fortsatz 91 des Positionierkörpers 89 spielfrei zwischen die waagerechten Schenkel des Positionieranschlags 90, während senkrechte Fortsätze 92 oberhalb und unterhalb des waagerechten Fortsatzes 91 an den freien Enden der Schenkel des Positionieranschlags 90 zur Anlage kommen. Der Hebel wird durch die Kolben-Zylinder-Einheit 6 in seine Normalstellung gezogen.

An einem dem Hebel 11 diametral gegenüberliegenden Fortsatz 12 des Rahmens 2 ist ein Gehäuse 13 befestigt, an das ein Antrieb 14 angeflanscht ist. Der Antrieb 14 weist einen Elektroservomotor 15 und eine nachgeschaltete spielfreie oder spielarme Wellenkupplung 16 auf.

Die durch die vorerwähnte Schere von den in diesem Fall drei zu einander parallelen Glassträngen abgetrennten Tropfen fallen jeweils in einen am Gehäuse 13 befestigten Trichter 17 und in später zu beschreibender Weise durch das Gehäuse 13 hindurch. Jeder Tropfen fällt schließlich in eine durch den Antrieb 14 um eine senkrechte Achse 18 hin und her schwenkbare, gekrümmte Scooprinne 19. Ein unteres Ende 20 jeder Scooprinne 19 ist durch die Schwenkung um die senkrechte Achse 18 nacheinander mit einem zu der jeweiligen Sektion einer I.S. (Individual Section)-Glasformmaschine führenden, stationären Rinnensystem 21 ausrichtbar. Solche Rinnensysteme sind an sich bekannt und müssen hier nicht näher erläutert werden.

Jede Scooprinne 19 trägt an ihrem oberen Ende einen Flansch 22, in dessen obere Fläche Bohrungen 23 zur Aufnahme von Befestigungselementen, Bohrungen 24 zur Aufnahme von Zentrierstiften und Kühlkanäle 25 und 26 münden. Die Kühlkanäle 25, 26 durchziehen die Scooprinnen 19 in an sich bekannter Weise und dienen dazu, die Arbeitstemperatur der Scooprinnen 19 auf einem geeigneten Wert zu halten.

Die Achse 3 ist an der stabilen Grundplatte 27 befestigt, die in der Draufsicht im Wesentlichen L-förmig ausgebildet ist und außerdem eine Konsole 28 mit Lagerböcken 29 und 30 trägt. Die Lagerböcke 29, 30 definieren die senkrechte Achse 8 für die Schwenkung des Zylinders 7. Die Grundplatte 27 ist gemäß Fig. 2 mit einem Scoopbalken 5 der Glasformmaschine verschraubt.

Fig. 2 zeigt, dass der Scoopbalken 5 in diesem Ausführungsbeispiel zwei miteinander verschweißte, stabile Rohre 31 und 32 aufweist, die ihrerseits mit einem Unterzug 33 und einem Oberzug 34 verschweißt sind. Die Grundplatte 27 ist mit dem Oberzug 34 verschraubt.

In Fig. 2 fallen die drei Tropfen im Wesentlichen gleichzeitig in Richtung der Pfeile 35 in die Trichter 17. Unten an dem Gehäuse 13 sind Außenhülsen 36 befestigt, die jeweils einen Anschlussstutzen 37 für die Zufuhr von Kühlmedium und einen Anschlussstutzen 38 für die Rückleitung verbrauchten Kühlmediums aufweisen. In jeder Außenhülse 36 ist eine Verbindungshülse 39 abgedichtet und drehbar gelagert. Die Verbindungshülsen 39 ragen nach unten hin aus der zugehörigen Außenhülse 36 heraus. Rohrförmige Zwischenstücke 40 unterschiedlicher Länge, die aus Platzgründen seitlich offen sein können, stellen die Verbindung zwischen den Verbindungshülsen 39 und den Flanschen 22 der Scooprinnen 19 her. Jedes Zwischenstück 40 weist in seiner Wand nicht gezeichnete Kühlkanäle auf, die in ständiger Verbindung mit den Kühlkanälen 25, 26 der Scooprinnen 19 stehen. Als Kühlmedium dient vorzugsweise Wasser.

Im Bereich des Tropfenverteilers 1 herrscht eine erhöhte Betriebstemperatur. Um den Elektroservomotor 15 vor schädlichen Einwirkungen dieser hohen Betriebstemperatur zu schützen, ist der Elektroservomotor 15 gemäß Fig. 2 von einem Kühlgehäuse 41 umgeben, das in Fig. 1 zur Vereinfachung und besseren Übersicht fortgelassen wurde. Dem Kühlgehäuse 41 wird durch einen Stutzen 42 Kühlluft in Richtung eines Pfeils 43 zugeführt. Die Abfuhr der verbrauchten Kühlluft aus dem Kühlgehäuse 41 erfolgt durch geeignete Auslassöffnungen.

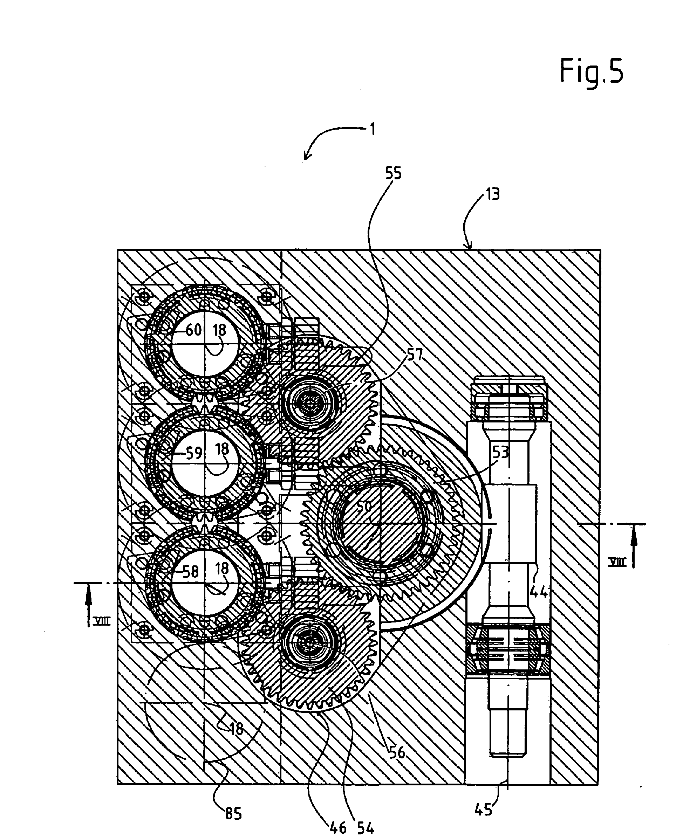

Der Antrieb 14 (Fig. 1 und 2) treibt gemäß Fig. 3 eine in dem Gehäuse 13 gelagerte, koaxiale Schnecke 44 mit waagerechter Längsachse 45 hin und her drehend an. Einzelheiten der Schnecke 44 und ihrer Lagerung sind Fig. 5 zu entnehmen. Die Schnecke 44 ist Bestandteil eines Getriebes 46, mit dem die hin und her drehende Bewegung von dem Antrieb 14 auf die Verbindungshülsen 39 und von dort über die Zwischenstücke 40 (Fig. 2) auf die Scooprinnen 19 übertragen wird. Gemäß den Fig. 3 und 5 weist das Getriebe 46 ein Schneckenrad 47 auf, das mit der Schnecke 44 im Eingriff steht und mit senkrechter Längsachse 50 mit einer Welle 51 über Wälzlager 48 und 49 in dem Gehäuse 13 drehbar gelagert ist. Die Welle 51 weist einen unteren Fortsatz 52 auf, mit dem ein Zahnrad 53 drehfest verbunden ist. Mit dem Zahnrad 53 stehen zwei in seitlichem Abstand voneinander angeordnete Zwischenzahnräder 54 und 55 im Eingriff. Die Zwischenzahnräder 54, 55 sind mit senkrechten Längsachsen 56 und 57 in dem Gehäuse 13 frei drehbar gelagert. Das Zwischenzahnrad 54 steht im Eingriff mit einem Ringritzel 58, während das Zwischenzahnrad 55 mit Ringritzeln 59 und 60 kämmt.

Gemäß Fig. 3 ist das Ringritzel 58 als außenverzahnter Zahnring radial außen an einer Hülse 61 befestigt. Ringritzel 58 und Hülse 61 können - wie hier - einteilig oder zweiteilig ausgebildet sein. Die Hülse 61 ist koaxial mit dem oberen Ende (vgl. 22) der zugehörigen Scooprinne 19 (Fig. 1 und 2) angeordnet und lässt die Tropfen durch eine axiale Durchbrechung 62 passieren. Die Hülse 61 ist über Wälzlager 63 und 64 drehbar in dem Gehäuse 13 gelagert und steht über eine Klauenkupplung 65 oder axiale Stifte in formschlüssiger Drehantriebsverbindung mit der Verbindungshülse 39. Die Verbindungshülse 39 ist durch nicht gezeichnete Schrauben mit der Hülse 61 verschraubt. Wie schon erwähnt, ist jede Verbindungshülse 39 über das zugehörige Zwischenstück 40 drehfest mit einer der Scooprinnen 19 verbunden.

Wie erwähnt, werden die Scooprinnen 19 durch ein Kühlmedium gekühlt. Das Kühlmedium wird durch den Anschlussstutzen 37 gemäß Fig. 3 eingespeist und gelangt über eine Stichbohrung 66 in der Wand der Außenhülse 36 in einen ersten Ringkanal 67 außen in der Verbindungshülse 39. Der erste Ringkanal 67 ist über eine Leitung 68 und eine nicht gezeichnete Anschlussleitung in der Wand des zugehörigen Zwischenstücks 40 mit dem Kühlkanal 25 (Fig. 1) der zugehörigen Scooprinne 19 verbunden. Der Kühlkanal 26 (Fig. 1) ist über eine Verbindungsleitung in der Wand des zugehörigen Zwischenstücks 40 mit einer Leitung 69 (Fig. 3) in der Wand der Verbindungshülse 39 verbunden. Die Leitung 69 mündet in einen zweiten Ringkanal 70 außen in der Verbindungshülse 39. Der Ringkanal 70 steht über eine Stichbohrung 71 in der Wand der Außenhülse 36 in ständiger Verbindung mit dem Anschlussstutzen 38. Damit ist eine ständige oder getaktete Zirkulation von Kühlmedium durch jede Scooprinne 19 gewährleistet. Ringdichtungen 72 bis 75 dichten die Außenfläche der Verbindungshülse 39 gegenüber der Außenhülse 36 ab. Ein das Getriebe 46 aufnehmender Innenraum 76 des Gehäuses 13 ist vorzugsweise vollständig mit Schmieröl geflutet, so dass das Getriebe und alle Lager ständig im Ölbad laufen.

Ein oberes Ende der Hülse 61 ist durch Ringdichtungen 77 und 78 gegenüber einer mit dem Gehäuse 13 verschraubten Kopfplatte 79 abgedichtet. Mit der Kopfplatte 79 ist über eine Zwischenplatte 80 der Trichter 17 verschraubt. Der Zwischenplatte 80 wird in Richtung eines Pfeils 81 durch eine Bohrung 82 Druckluft zugeführt. Diese Druckluft gelangt in einen Ringraum 83 und von dort über einen Ringspalt 84 zwischen dem Trichter 17 und der Zwischenplatte 80 in die Durchbrechung 62. Dadurch entsteht ein abwärts gerichteter Druckluftring, der den Transport der Tropfen durch das System hindurch fördert sowie den Tropfen zentriert, um ein Anschlagen (Berühren) des Tropfens zu verhindern.

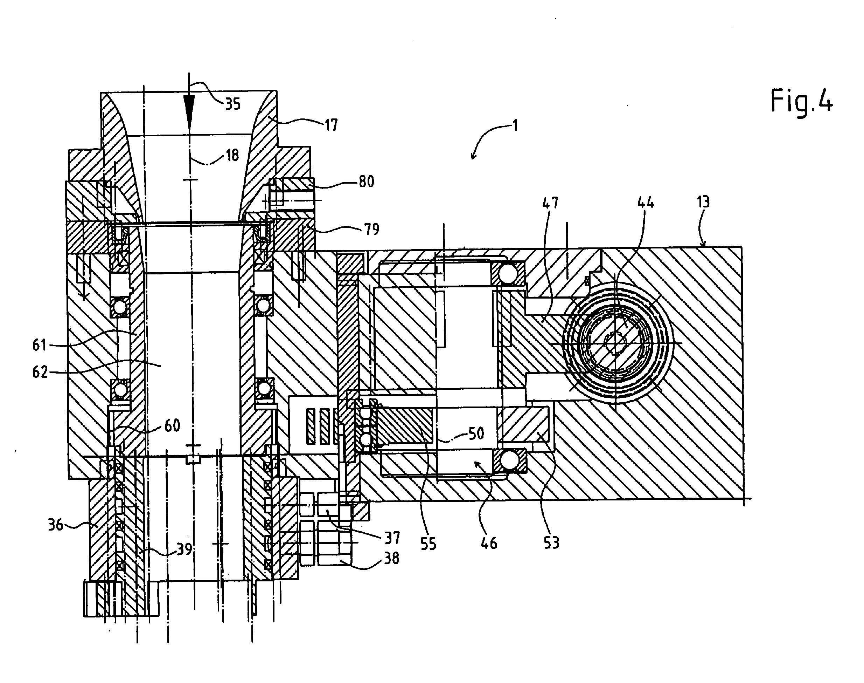

In Zusammenschau mit Fig. 5 zeigt Fig. 4 weitere Einzelheiten des Getriebes 46.

In den Fig. 1 bis 5 ist mit voll ausgezogenen Linien der Tropfenverteiler 1 für Dreifachtropfenbetrieb dargestellt. Gemäß Fig. 5 kann der Tropfenverteiler 1 für einen Vierfachtropfenbetrieb erweitert werden. Dies geschieht z.B. dadurch, dass in seitlicher Fluchtung mit den drei schon vorhandenen Scooprinnen 19 eine vierte Scooprinne angeordnet wird. Deren zugeordnetes Ringritzel 85 ist in Fig. 5 links unten strichpunktiert angedeutet. Das Ringritzel 85 würde dann wie das Ringritzel 58 im Eingriff mit dem Zwischenzahnrad 54 stehen.

In allen Zeichnungsfiguren sind gleiche Teile mit gleichen Bezugszahlen versehen.

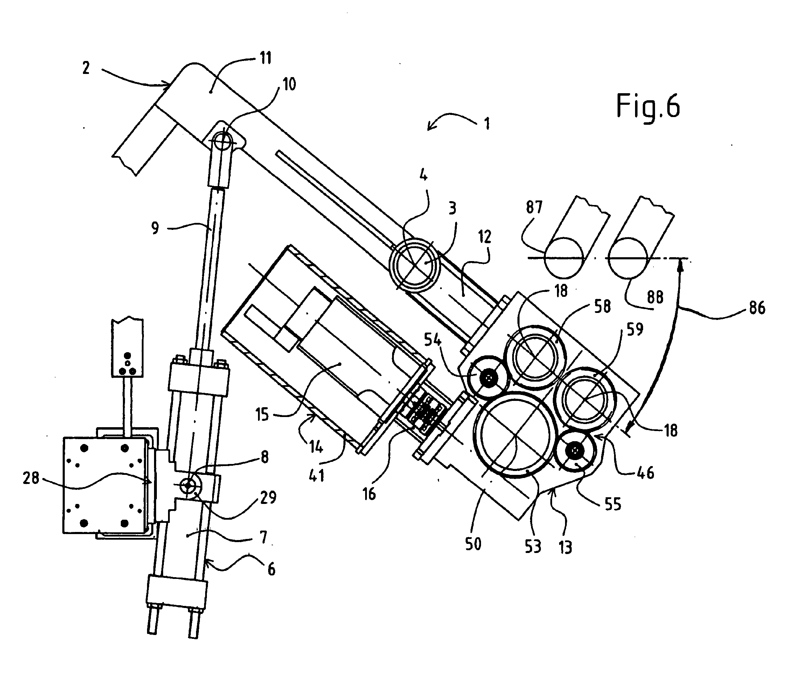

Fig. 6 zeigt einen Tropfenverteiler 1, der für Doppeltropfenbetrieb vorgesehen ist. In dem Getriebe 46 steht hier jedes Zwischenzahnrad 54, 55 mit nur einem Ringritzel 58; 59 im Eingriff.

Während in den Fig. 1 und 2 der Tropfenverteiler 1 in seiner dem Normalbetrieb entsprechenden Stellung gezeigt ist, wurde in Fig. 6 für den Notbetrieb die Kolben-Zylinder-Einheit 6 betätigt und die Kolbenstange 9 ausgefahren. Das hat dazu geführt, dass der Rahmen 2 um die Längsachse 4 um einen Winkel 86 von z.B. 39 ° geschwenkt wurde. Die von der Schere weiterhin gelieferten Tropfen fallen jetzt nicht mehr in die zu den Ringritzeln 58, 59 gehörenden Trichter 17 (vgl. Fig.3) sondern in Scherbenrinnen 87 und 88. Wenn die Störung in der Glasformmaschine wieder beseitigt ist, kann die Kolbenstange 9 eingezogen und der Tropfenverteiler 1 in seine normale Betriebsstellung zurückgeschwenkt werden.

Fig. 7 zeigt einen Tropfenverteiler 1 für Einfachtropfenbetrieb mit nur einer Scooprinne. Entsprechend ist auch nur das einzige Ringritzel 58 vorhanden, das über das Zwischenzahnrad 54 durch das Zahnrad 53 hin und her drehend angetrieben wird.

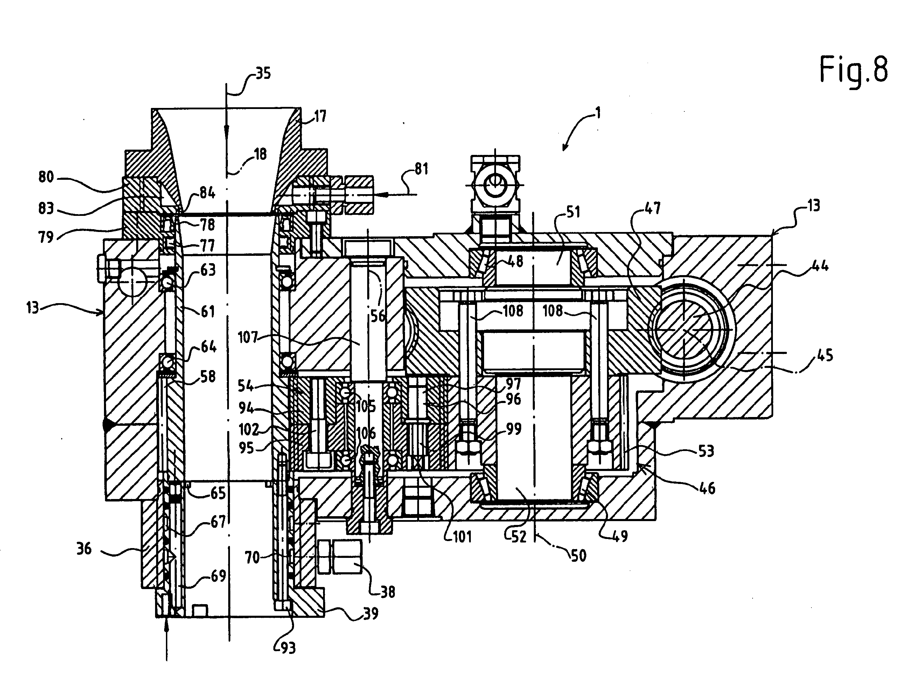

Fig. 8 verdeutlicht, dass die Verbindungshülse 39 durch achsparallele Schrauben 93 unten an der Hülse 61 befestigt ist.

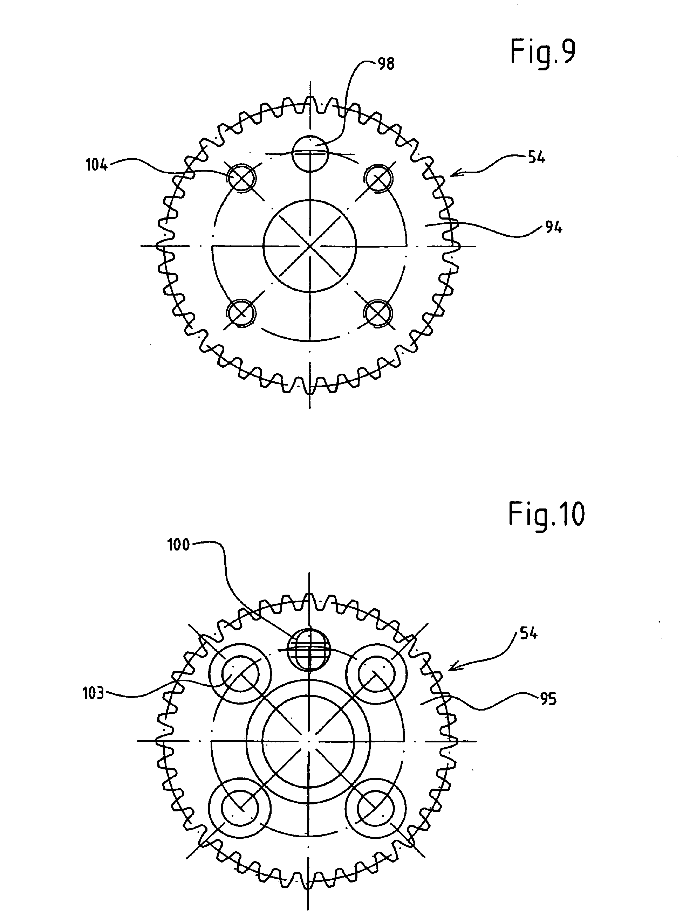

Das Zwischenzahnrad 54 ist in zwei axial aufeinanderfolgende Teilzahnräder 94 und 95 unterteilt. Die beiden Teilzahnräder 94, 95 können relativ zueinander in Umfangsrichtung eingestellt werden, um das Spiel der Verzahnung des Getriebes 46 zu minimieren. Die gewünschte Relativstellung ist durch einen Exzenterbolzen 96 einstellbar. Der Exzenterbolzen 96 ist mit einem ersten Abschnitt 97 von kreisrunder Querschnittsfläche in einer komplementär kreisrunden, achsparallelen Bohrung 98 (Fig. 9) des oberen Teilzahnrads 94 drehbar gelagert. Der Exzenterbolzen 96 ist ferner mit einem exzentrischen zweiten Abschnitt 99 von unrunder Querschnittsfläche in einer achsparallelen Einstellbohrung 100 (Fig. 10) des anderen Teilzahnrads 95 angeordnet. Der zweite Abschnitt 99 weist gemäß Fig. 8 unten einen Vierkant 101 auf, auf den ein entsprechender Steckschlüssel gesteckt werden kann. Durch Drehung des Steckschlüssels übt der zweite Abschnitt 99 seine Exzenterwirkung auf das untere Teilzahnrad 95 aus und dreht dieses relativ zu dem oberen Teilzahnrad 94, bis das Spiel in der Verzahnung des Getriebes 46 in der gewünschten Weise minimiert ist. Die dadurch erzielte relative Drehstellung zwischen den Teilzahnrädern 94 und 95 wird anschließend durch Festziehen von vier über den Umfang verteilten Schrauben 102 fixiert. Jede Schraube 102 durchdringt eine Bohrung 103 (Fig. 10) in dem unteren Teilzahnrad 95 und ist in eine Gewindebohrung 104 des oberen Teilzahnrads 94 eingeschraubt.

Die Teilzahnräder 94, 95 sind über Wälzlager 105 und 106 auf einer montierten Steckachse 107 frei drehbar gelagert. Beide Teilzahnräder 94, 95 des Zwischenzahnrads 54 stehen sowohl mit dem Zahnrad 53 als auch mit dem Ringritzel 58 im Eingriff.

Fig. 8 verdeutlicht, wie das Zahnrad 53 durch achsparallele Schrauben 108 an der Unterseite des Schneckenrades 47 befestigt ist.

Die Fig. 9 und 10 zeigen Einzelheiten der Teilzahnräder 94, 95.

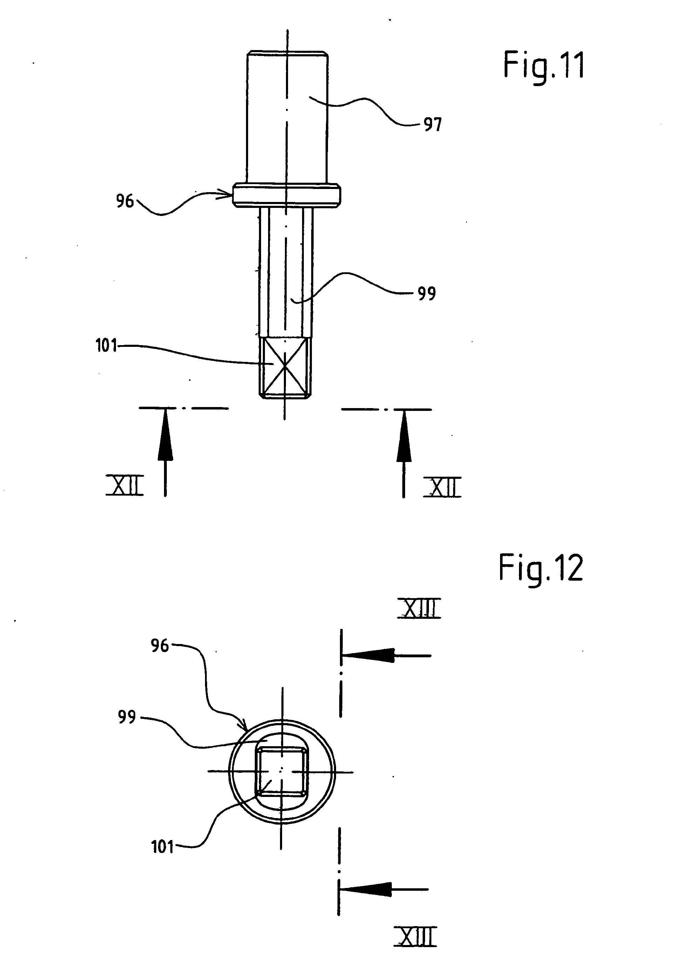

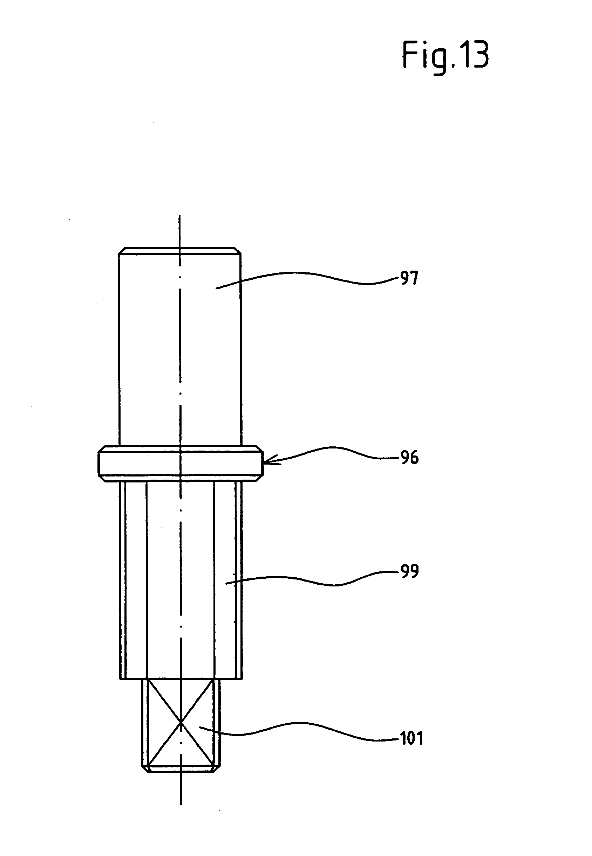

Den Fig. 11 bis 13 sind Einzelheiten des Exzenterbolzens 96 zu entnehmen.

## Patentansprüche

1. Tropfenverteiler (1) zur Verteilung von Tropfen schmelzflüssigen Glases in einer vorherbestimmbaren Aufeinanderfolge auf Formen mehrerer Sektionen einer Glasformmaschine,
mit wenigstens einer durch einen Antrieb (14) um eine senkrechte Achse (18) hin und her schwenkbaren, gekrümmten Scooprinne (19),
wobei ein oberes Ende (22) jeder Scooprinne (19) im Normalbetrieb alle aus einer Auslassöffnung eines Tropfenspeisers gewonnenen Tropfen aufnimmt,
wobei ein unteres Ende (20) jeder Scooprinne (19) durch die Schwenkung nacheinander mit einem zu der jeweiligen Sektion führenden Rinnensystem (21) fluchtend ausrichtbar ist,
wobei koaxial und in Antriebsverbindung mit dem oberen Ende (22) jeder Scooprinne (19) ein Ringritzel (58,59,60,85) angeordnet ist,
und wobei der Antrieb (14) einen Elektroservomotor (15) aufweist und der Elektroservomotor (15) über ein Getriebe (46) mit dem wenigstens einen Ringritzel (58,59,60,85) verbunden ist,
**dadurch gekennzeichnet, dass** das Getriebe (46) aufweist:
Eine durch den Elektroservomotor (15) hin und her drehend antreibbare Schnecke (44), ein mit der Schnecke (44) im Eingriff stehendes Schneckenrad (47) und ein zu dem Schneckenrad (47) koaxiales und drehfestes Zahnrad (53), wobei das Zahnrad (53) in Antriebsverbindung mit dem wenigstens einen Ringritzel (58,59,60,85) steht.

2. Tropfenverteiler nach Anspruch 1,
**dadurch gekennzeichnet, dass** dann, wenn der Tropfenverteiler (1) nur eine Scooprinne (19) aufweist, das Getriebe (46) ein Zwischenzahnrad (54) besitzt,
wobei das Zwischenzahnrad (54) einerseits mit dem Zahnrad (53) und andererseits mit dem Ringritzel (58) kämmt.

3. Tropfenverteiler nach Anspruch 1,
**dadurch gekennzeichnet, dass** dann, wenn der Tropfenverteiler (1) mehr als eine Scooprinne (19) aufweist, das Getriebe (46) zwei in seitlichem Abstand voneinander angeordnete Zwischenzahnräder (54,55) besitzt,
wobei jedes Zwischenzahnrad (54,55) einerseits mit dem Zahnrad (53) und andererseits mit wenigstens einem der Ringritzel (58,59,60,85) kämmt.

4. Tropfenverteiler nach Anspruch 3,
**dadurch gekennzeichnet, dass** bei Doppeltropfenbetrieb jedes Zwischenzahnrad (54,55) mit nur einem der Ringritzel (58,59) kämmt.

5. Tropfenverteiler nach Anspruch 3,
**dadurch gekennzeichnet, dass** bei Dreifachtropfenbetrieb das eine Zwischenzahnrad (54) mit einem (58) der Ringritzel (58,59,60) und das andere Zwischenzahnrad (55) mit den beiden übrigen Ringritzeln (59,60) kämmt.

6. Tropfenverteiler nach Anspruch 3,
**dadurch gekennzeichnet, dass** bei Vierfachtropfenbetrieb jedes Zwischenzahnrad (54,55) mit zweien (58,85;59,60) der Ringritze (58,59;60,85) kämmt.

7. Tropfenverteiler nach einem der Ansprüche 1 bis 6,
**dadurch gekennzeichnet, dass** jedes Ringritzel (58,59,60,85) als außenverzahnter Zahnring radial außen an einer Hülse (61) befestigt ist,
dass die Hülse (61) koaxial mit dem oberen Ende (22) der zugehörigen Scooprinne (19) angeordnet ist und die Tropfen durch eine axiale Durchbrechung (62) passieren lässt,
und dass die Hülse (61) drehbar in einem Gehäuse (13) gelagert ist und in Drehantriebsverbindung mit dem oberen Ende (22) der zugehörigen Scooprinne (19) steht.

8. Tropfenverteiler nach Anspruch 7,
**dadurch gekennzeichnet, dass** koaxial mit der Hülse (61) eine Verbindungshülse (39) drehfest einerseits mit der Hülse (61) und andererseits mit dem oberen Ende (22) der zugehörigen Scooprinne (19) verbunden ist,
dass die Verbindungshülse (39) abgedichtet in einer an dem Gehäuse (13) befestigen Außenhülse (36) drehbar gelagert ist,
dass die Verbindungshülse (39) radial außen einen ersten (67) und einen zweiten Ringkanal (70) aufweist, die gegeneinander abgedichtet und mit Kühlkanälen (25,26) in einer Wand der zugehörigen Scooprinne (19) verbunden sind,
dass der erste Ringkanal (67) in ständiger Verbindung mit einer Kühlmediumzuleitung (37,66) in der Außenhülse (36) steht,
und dass der zweite Ringkanal (70) in ständiger Verbindung mit einer Kühlmediumrückleitung (71,38) in der Außenhülse (36) steht.

9. Tropfenverteiler nach Anspruch 7,
**dadurch gekennzeichnet, dass** koaxial mit der Hülse (61) eine Verbindungshülse (39) drehfest einerseits mit der Hülse (61) und andererseits mit dem oberen Ende (22) der zugehörigen Scooprinne (19) verbunden ist,
dass die Verbindungshülse (39) abgedichtet in einer an dem Gehäuse (13) befestigen Außenhülse (36) drehbar gelagert ist,
dass die Verbindungshülse (39) radial außen einen ersten Ringkanal (67) aufweist, der mit zur Atmosphäre offenen Kühlkanälen (25) in einer Wand der zugehörigen Scooprinne (19) verbunden ist,
und dass der erste Ringkanal (67) in ständiger Verbindung mit einer Kühlgaszuleitung (37,66) in der Außenhülse (36) steht.

10. Tropfenverteiler nach einem der Ansprüche 2 bis 9,
**dadurch gekennzeichnet, dass** jedes Zwischenzahnrad (54;55) in zwei axial aufeinanderfolgende Teilzahnräder (94,95) unterteilt ist,
dass die beiden Teilzahnräder (94,95) jedes Zwischenzahnrads (54;55) relativ zu einander in Umfangsrichtung einstellbar sind, um das Spiel im Getriebe (46) zu minimieren,
und dass die jeweilige Relativstellung fixierbar (102) ist.

11. Tropfenverteiler nach Anspruch 10,
**dadurch gekennzeichnet, dass** die Relativstellung durch einen Exzenterbolzen (96) einstellbar ist,
dass der Exzenterbolzen (96) mit einem ersten Abschnitt (97) von kreisrunder Querschnittsfläche in einer komplementär kreisrunden, achsparallelen Bohrung (98) des einen Teilzahnrads (94) drehbar gelagert ist,
und dass der Exzenterbolzen (96) mit einem exzentrischen zweiten Abschnitt (99) von unrunder Querschnittsfläche in einer achsparallelen Einstellbohrung (100) des anderen Teilzahnrads (95) angeordnet ist.

12. Tropfenverteiler nach Anspruch 10 oder 11,
**dadurch gekennzeichnet, dass** beide Teilzahnräder (94,95) jedes Zwischenzahnrads (54;55) sowohl mit dem Zahnrad (53) als auch mit dem wenigstens einen Ringritzel (58,59,60,85) im Eingriff stehen.

13. Tropfenverteiler nach einem der Ansprüche 1 bis 12,
**dadurch gekennzeichnet, dass** zwischen dem Elektroservomotor (15) und der Schnecke (44) eine Kupplung (16) angeordnet ist.

14. Tropfenverteiler nach einem der Ansprüche 1 bis 13,
**dadurch gekennzeichnet, dass** der Tropfenverteiler (1) um eine senkrechte Achse (4) hin und her schwenkbar an der Glasformmaschine gelagert ist.

15. Tropfenverteiler nach Anspruch 14,
**dadurch gekennzeichnet, dass** die Schwenkung durch eine Kolben-ZylinderEinheit (6) erfolgt, deren Zylinder (7) schwenkbar an der Glasformmaschine und deren Kolbenstange (9) an einem Hebel (11) des Tropfenverteilers (1) angelenkt sind.

16. Tropfenverteiler nach Anspruch 15,
**dadurch gekennzeichnet, dass** an dem Hebel (11) im Abstand von der Längsachse (4) ein Positionierkörper (89) befestigt ist,
und dass der Positionierkörper (89) in einer nicht ausgeschwenkten Normalstellung des Tropfenverteilers (1) mit einem maschinenfesten Positionieranschlag (90) zusammenwirkt und den Tropfenverteiler (1) sowohl in waagerechter als auch in senkrechter Richtung in der Normalstellung positioniert.

## Claims

1. Gob distributor (1) for distributing gobs of molten glass in a predeterminable sequence onto moulds of a plurality of sections of a glass forming machine,
having at least one curved scoop channel (19) which can be pivoted in a reciprocating manner about a vertical axis (18) by means of a drive (14),
wherein in normal operation an upper end (22) of each scoop channel (19) receives all gobs obtained from an outlet orifice of a gob feeder,
wherein a lower end (20) of each scoop channel (19) can be successively orientated, by the pivoting motion, so as to be aligned with a channel system (21) leading to the respective section,
wherein an annular pinion (58, 59, 60, 85) is disposed coaxially and in a driving connection with the upper end (22) of each scoop channel (19),
and wherein the drive (14) has an electric servomotor (15) and the electric servomotor (15) is connected to the at least one annular pinion (58, 59, 60, 85) via a gear mechanism (46),
**characterised in that** the gear mechanism (46) comprises:
a screw (44) which can be rotationally driven in a reciprocating manner by the electric servomotor (15), a worm wheel (47) engaged with the screw (44), and a toothed wheel (53) which is non-rotational and coaxial with respect to the worm wheel (47), wherein the toothed wheel (53) is in a driving connection with the at least one annular pinion (58, 59, 60, 85).

2. Gob distributor as claimed in claim 1,
**characterised in that** when the gob distributor (1) has only one scoop channel (19) the gear mechanism (46) has an intermediate toothed wheel (54),
wherein the intermediate toothed wheel (54) meshes on the one hand with the toothed wheel (53) and on the other hand with the annular pinion (58).

3. Gob distributor as claimed in claim 1,
**characterised in that** when the gob distributor (1) has more than one scoop channel (19) the gear mechanism (46) has two intermediate toothed wheels (54, 55) disposed laterally spaced apart from each other,
wherein each intermediate toothed wheel (54, 55) meshes on the one hand with the toothed wheel (53) and on the other hand with at least one of the annular pinions (58, 59, 60, 85).

4. Gob distributor as claimed in claim 3,
**characterised in that** in the case of double-gob operation each intermediate toothed wheel (54, 55) meshes with only one of the annular pinions (58, 59).

5. Gob distributor as claimed in claim 3,
**characterised in that** in the case of triple-gob operation the one intermediate toothed wheel (54) meshes with one (58) of the annular pinions (58, 59, 60), and the other intermediate toothed wheel (55) meshes with the two remaining annular pinions (59, 60).

6. Gob distributor as claimed in claim 3,
**characterised in that** in the case of quadruple-gob operation each intermediate toothed wheel (54, 55) meshes with two (58, 85; 59, 60) of the annular pinions (58, 59, 60, 85).

7. Gob distributor as claimed in any one of claims 1 to 6,
**characterised in that** each annular pinion (58, 59, 60, 85) is radially attached as an externally-toothed toothed ring to the outside of a sleeve (61),
that the sleeve (61) is disposed coaxially with the upper end (22) of the associated scoop channel (19) and allows the gobs to pass through an axial aperture (62),
and that the sleeve (61) is rotatably mounted in a housing (13) and is in a rotational driving connection with the upper end (22) of the associated scoop channel (19).

8. Gob distributor as claimed in claim 7,
**characterised in that**, coaxially with the sleeve (61), a connection sleeve (39) is connected in a non-rotational manner on the one hand to the sleeve (61) and on the other hand to the upper end (22) of the associated scoop channel (19),
that the connection sleeve (39) is mounted in a sealed and rotatable manner in an outer sleeve (36) attached to the housing (13),
that the connection sleeve (39) has, in the radially outwards direction, a first (67) and a second annular duct (70) which are sealed with respect to each other and are connected to cooling ducts (25, 26) in a wall of the associated scoop channel (19),
that the first annular duct (67) is continuously connected to a cooling medium supply line (37, 66) in the outer sleeve (36),
and that the second annular duct (70) is continuously connected to a cooling medium return line (71, 38) in the outer sleeve (36).

9. Gob distributor as claimed in claim 7,
**characterised in that**, coaxially with the sleeve (61), a connection sleeve (39) is connected in a non-rotational manner on the one hand to the sleeve (61) and on the other hand to the upper end (22) of the associated scoop channel (19),
that the connection sleeve (39) is mounted in a sealed and rotatable manner in an outer sleeve (36) attached to the housing (13),
that the connection sleeve (39) has, in the radially outwards direction, a first annular duct (67) which is connected to cooling ducts (25), which are open to the atmosphere, in a wall of the associated scoop channel (19),
and that the first annular duct (67) is continuously connected to a cooling gas supply line (37, 66) in the outer sleeve (36).

10. Gob distributor as claimed in any one of claims 2 to 9,
**characterised in that** each intermediate toothed wheel (54; 55) is divided into two partial toothed wheels (94, 95) which succeed each other in the axial direction,
that the two partial toothed wheels (94, 95) of each intermediate toothed wheel (54; 55) can be adjusted with respect to each other in the peripheral direction in order to minimise the clearance in the gear mechanism (46),
and that the respective relative position can be fixed (102).

11. Gob distributor as claimed in claim 10,
**characterised in that** the relative position can be adjusted by means of an eccentric bolt (96),
that the eccentric bolt (96) is rotatably mounted with a first portion (97) with a circular cross-sectional surface in a complementary circular, axially parallel bore (98) in one partial toothed wheel (94),
and that the eccentric bolt (96) is disposed with an eccentric second portion (99) with a non-round cross-sectional surface in an axially parallel adjusting bore (100) in the other partial toothed wheel (95).

12. Gob distributor as claimed in claim 10 or 11,
**characterised in that** both partial toothed wheels (94, 95) of each intermediate toothed wheel (54; 55) are engaged with both the toothed wheel (53) and also with the at least one annular pinion (58, 59, 60, 85).

13. Gob distributor as claimed in any one of claims 1 to 12,
**characterised in that** between the electric servomotor (15) and the screw (44) a coupling (16) is disposed.

14. Gob distributor as claimed in any one of claims 1 to 13,
**characterised in that** the gob distributor (1) is mounted on the glass forming machine so as to be able to pivot in a reciprocating manner about a vertical axis (4).

15. Gob distributor as claimed in claim 14,
**characterised in that** the pivoting movement is effected by means of a piston-cylinder unit (6), the cylinder (7) of which is articulated in a pivotable manner on the glass forming machine and the piston rod (9) of which is articulated on a lever (11) of the Gob distributor (1).

16. Gob distributor as claimed in claim 15,
**characterised in that** a positioning body (89) is attached to the lever (11) spaced apart from the longitudinal axis (4),
and that in a normal - not pivoted out - position of the gob distributor (1) the positioning body (89) cooperates with a positioning stop (90), which is attached to the machine, and positiones the gob distributor (1) in the normal position both in the horizontal and also in the vertical direction.

## Revendications

1. Distributeur de gouttes (1) pour la répartition de gouttes de verre fondu suivant une séquence préalablement définie dans des moules de plusieurs sections d'une machine à mouler le verre,
avec au moins une cuillère (19) courbée, pivotant en va-et-vient autour d'un axe (18) vertical au moyen d'un entraînement (14),
une extrémité supérieure (22) de chaque cuillère (19) recevant en fonctionnement normal toutes les gouttes provenant d'une ouverture de sortie d'un distributeur de gouttes,
une extrémité inférieure (20) de chaque cuillère (19) étant successivement alignable par pivotement avec un système de goulottes (21) menant à la section correspondante,
un pignon annulaire (58, 59, 60, 85) étant disposé coaxialement et en relation d'entraînement avec l'extrémité supérieure (22) de chaque cuillère (19),
et l'entraînement (14) comportant un servomoteur électrique (15), et ledit servomoteur électrique (15) étant relié par un engrenage (46) au pignon, ou aux pignons annulaires (58, 59, 60, 85),
**caractérisé en ce que** l'engrenage (46) comprend :
une vis sans fin (44) entraînable en rotation en va-et-vient par le servomoteur électrique (15), une roue hélicoïdale (47) s'engrenant avec la vis sans fin (44) et une roue dentée (53) coaxiale à la vis sans fin (44) et solidaire en rotation avec celle-ci, ladite roue dentée (53) étant en relation d'entraînement avec le ou les pignons annulaires (58, 59, 60, 85).

2. Distributeur de gouttes selon la revendication 1,
**caractérisé en ce que** l'engrenage (46) est pourvu d'une roue dentée intermédiaire (54) lorsque le distributeur de gouttes (1) ne comporte qu'une seule cuillère (19),
ladite roue dentée intermédiaire (54) s'engrenant d'une part avec la roue dentée (53) et d'autre part avec le pignon annulaire (58).

3. Distributeur de gouttes selon la revendication 1,
**caractérisé en ce que** l'engrenage (46) est pourvu de deux roues dentées intermédiaires (54, 55) disposées à intervalle latéral l'une de l'autre lorsque le distributeur de gouttes (1) comporte plus d'une cuillère (19),
lesdites roues dentées intermédiaires (54,55) s'engrenant d'une part avec la roue dentée (53) et d'autre part avec au moins un des pignons annulaires (58, 59, 60, 85).

4. Distributeur de gouttes selon la revendication 3,
**caractérisé en ce que** chaque roue dentée intermédiaire (54, 55) ne s'engrène qu'avec un des pignons annulaires (58, 59) en cas de fonctionnement à deux gouttes.

5. Distributeur de gouttes selon la revendication 3,
**caractérisé en ce qu'**une roue dentée intermédiaire (54) s'engrène avec un seul (58) des pignons annulaires (58, 59, 60) et **en ce que** l'autre roue dentée intermédiaire (55) s'engrène avec les deux autres pignons annulaires (59, 60) en cas de fonctionnement à trois gouttes.

6. Distributeur de gouttes selon la revendication 3,
**caractérisé en ce que** chaque roue dentée intermédiaire (54, 55) s'engrène avec deux (58, 85 ; 59, 60) des pignons annulaires (58, 59, 60, 85) en cas de fonctionnement à quatre gouttes.

7. Distributeur de gouttes selon l'une des revendications 1 à 6,
**caractérisé en ce que** chaque pignon annulaire (58, 59, 60, 85) est fixé comme couronne à denture extérieure contre un manchon (61), extérieurement dans le sens radial,
**en ce que** le manchon (61) est disposé coaxialement à l'extrémité supérieure (22) de la cuillère (19) correspondante, et laisse passer les gouttes par une ouverture axiale (62),
et **en ce que** le manchon (61) est logé libre en rotation dans un carter (13), et est en liaison d'entraînement en rotation avec l'extrémité supérieure (22) de la cuillère (19) correspondante.

8. Distributeur de gouttes selon la revendication 7,
**caractérisé en ce que**, coaxialement au manchon (61), un manchon de connexion (39) est raccordé de manière solidaire en rotation au manchon (61), d'une part, et à l'extrémité supérieure (22) de la cuillère (19) correspondante, d'autre part,
**en ce que** le manchon de connexion (39) est logé de manière étanche, libre en rotation dans un manchon extérieur (36) fixé contre le carter (13),
**en ce que** le manchon de connexion (39) comporte extérieurement dans le sens radial un premier canal annulaire (67) et un deuxième canal annulaire (70), étanches l'un par rapport à l'autre et reliés par des canaux de refroidissement (25, 26) dans une paroi de la cuillère (19) correspondante,
**en ce que** le premier canal annulaire (67) est en liaison constante avec un conduit d'amenée de milieu réfrigérant (37, 66) dans le manchon extérieur (36),
et **en ce que** le deuxième canal annulaire (70) est en liaison constante avec un conduit de retour de milieu réfrigérant (71, 38) dans le manchon extérieur (36).

9. Distributeur de gouttes selon la revendication 7,
**caractérisé en ce que**, coaxialement au manchon (61), un manchon de connexion (39) est raccordé de manière solidaire en rotation au manchon (61), d'une part, et à l'extrémité supérieure (22) de la cuillère (19) correspondante, d'autre part,
**en ce que** le manchon de connexion (39) est logé de manière étanche, libre en rotation dans un manchon extérieur (36) fixé contre le carter (13),
**en ce que** le manchon de connexion (39) comporte extérieurement dans le sens radial un premier canal annulaire (67) qui est relié à des canaux de refroidissement (25) ouverts vers l'atmosphère dans une paroi de la cuillère (19) correspondante,
et **en ce que** le premier canal annulaire (67) est en liaison constante avec un conduit d'amenée de gaz réfrigérant (37, 66) dans le manchon extérieur (36).

10. Distributeur de gouttes selon l'une des revendications 2 à 9,
**caractérisé en ce que** chaque roue dentée intermédiaire (54 ; 55) est subdivisée en deux roues dentées partielles (94, 95) axialement superposées,
**en ce que** les deux roues dentées partielles (94, 95) de chaque roue dentée intermédiaire (54 ; 55) sont réglables l'une relativement à l'autre en direction périphérique, afin de minimiser le jeu de l'engrenage (46),
et **en ce que** chaque position relative peut être fixée (102).

11. Distributeur de gouttes selon la revendication 10,
**caractérisé en ce que** la position relative est réglable au moyen d'un axe excentrique (96),
**en ce que** l'axe excentrique (96) est logé libre en rotation par un premier tronçon (97) à section de surface circulaire dans un alésage (98) cylindrique complémentaire à parallélisme axial de la première roue dentée partielle (94),
et **en ce que** l'axe excentrique (96) est disposé par un deuxième tronçon (99) à section de surface non circulaire dans un alésage de réglage (100) à parallélisme axial de l'autre roue dentée partielle (95).

12. Distributeur de gouttes selon la revendication 10 ou la revendication 11,
**caractérisé en ce que** les deux roues dentées partielles (94, 95) de chaque roue dentée intermédiaire (54 ; 55) sont en prise avec la roue dentée (53) ainsi qu'avec le ou les pignons annulaires (58, 59, 60, 85).

13. Distributeur de gouttes selon l'une des revendications 1 à 12,
**caractérisé en ce qu'**un embrayage (16) est disposé entre le servomoteur électrique (15) et la vis (44).

14. Distributeur de gouttes selon l'une des revendications 1 à 13,
**caractérisé en ce que** le distributeur de gouttes (1) est monté pivotant en va-et-vient autour d'un axe (4) vertical sur la machine à mouler le verre.

15. Distributeur de gouttes selon la revendication 14,
**caractérisé en ce que** le pivotement est produit par une unité piston-cylindre (6), dont le cylindre (7)est articulé de manière à pouvoir pivoter contre la machine à mouler le verre, et dont la tige de piston (9) est articulée contre un levier (11) du distributeur de gouttes (1).

16. Distributeur de gouttes selon la revendication 15,
**caractérisé en ce qu'**un corps de positionnement (89) est fixé contre le levier (11), à intervalle de l'axe longitudinal (4),
et **en ce que**, dans une position normale non pivotée du distributeur de gouttes (1), le corps de positionnement (89) coopère avec une butée de positionnement (90) fixe sur la machine, et place en position normale le distributeur de gouttes (1) tant en direction horizontale qu'en direction verticale.
